Europäisches Patentamt

European Patent Office

Office européen des brevets

(19)

(11) Publication number

**0 158 528**

**A2**

(12) **EUROPEAN PATENT APPLICATION**

(21) Application number **85302431.3**

(22) Date of filing: **04.04.85**

(51) Int. Cl.⁴: **B 29 C 65/16**
**B 29 C 65/34, B 23 K 26/00**

(30) Priority **09.04.84 JP 70606/84**

(43) Date of publication of application:
**16.10.85 Bulletin 85/42**

(84) Designated Contracting States:
**DE FR GB**

(71) Applicant: **TOYOTA JIDOSHA KABUSHIKI KAISHA**
**1, Toyota-cho Toyota-shi**
**Aichi-ken 471(JP)**

(72) Inventor: **Terasawa, Toshihisa**
**3-Chome 33 Aizuma-Cho**
**Toyota-shi Aichi-ken(JP)**

(74) Representative: **Brock, Peter William et al,**
**Michael Burnside & Partners 2 Serjeants' Inn Fleet Street**
**London EC4Y 1HL(GB)**

(54) **A process for joining different kinds of synthetic resins.**

(57) A process for joining a first kind of synthetic resin (1) to a second kind of synthetic resin (2) includes several steps. A first step is providing a first kind of synthetic resin (1). A second step is setting a mesh (3) or spiny plate (31) on the first kind of synthetic resin (1). A third step is setting an inner surface of a second kind of synthetic resin (2) on the mesh (3). A fourth step is exposing an outer surface of the second kind of synthetic resin (2) to a laser beam. The second kind of synthetic resin (2) transmits the laser beam to the first kind of synthetic resin (1), which stores up heat of the laser beam. A portion (21) of the second kind of synthetic resin (2) and a portion (11) of the first kind of synthetic resin (1) are melted by the heat and stick to the mesh (3) or spiny plate (31). Accordingly, the second kind of synthetic resin (2) is joined securely to the first kind of synthetic resin (1)

Fig. 2

## A PROCESS FOR JOINING DIFFERENT
## KINDS OF SYNTHETIC RESINS

The present invention relates to a process for joining differing kinds of synthetic resins to each other, and more particularly to a process for joining them using the heat of a laser beam.

In a first conventional process for physically joining synthetic resins, each of the synthetic resins has a contact surface thereon. A metal mesh is disposed on the contact surfaces of the synthetic resins, and the mesh is sandwiched between both of the synthetic resins. When the mesh is heated, both of the contact surfaces of the synthetic resins are melted by the heat of the mesh. Then, pressure is applied to the outside of the synthetic resins to press them together, and the synthetic resins are cooled. As a result of this first conventional process, one of the synthetic resins is joined to the other of the synthetic resins.

In this first conventional process, both synthetic resin normally are the same kind of synthetic resin so that both will have the same melting point, and so that both will blend easily into one another. If different kinds of synthetic resins are used, they may have a differing melting points and may not blend easily into one another.

Further, in the first conventional process, a connecting wire is disposed between both of the contact surfaces of the synthetic resins to supply electricity to heat the mesh. Connecting the wire to mesh between the synthetic resins requires an undesirably high amount of manual labor.

In a second conventional process for chemically joining synthetic resins, each of the synthetic resins has a contact surface thereon, and a bonding compound is disposed between both of the contact surfaces of the synthetic resins. The bonding compound normally is solid and is melted by heat, typically produced by applying high frequency or supersonic waves to bonding compound. These waves also preferably melt the synthetic resins slightly to improve bonding. After a compressive force is applied to the synthetic resins, the synthetic resins are cooled. As a result of the second conventional process, one of the synthetic resins is joined to the other.

In the second conventional process, the synthetic resins again should be the same kind of synthetic resin, this time so that the bounding compound has the same adhesive properties for bounding to both synthetic resins. If different kinds of synthetic resins are used, the bonding compound may have differing adhesive properties as to the different kinds of synthetic resins. Accordingly, the adhesive strength of the bond to one kind of synthetic resin may be different from the adhesive strength of the bond to a different kind of synthetic resin, i.e., one bond may have a weak adhesive strength. Further, in the second conventional process with different synthetic resins, the synthetic resins may not both be melted by the heat of the high frequency or the supersonic waves.

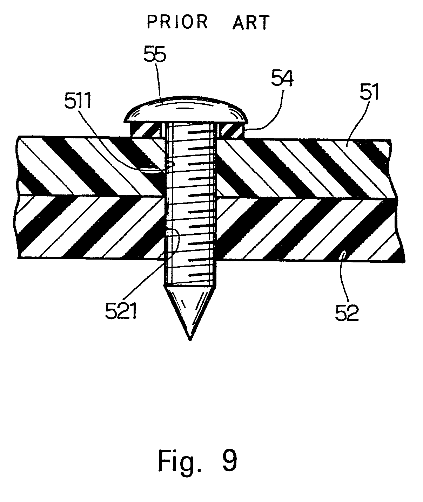

FIG. 9 shows a third conventional process for mechanically joining different kinds of synthetic resins. As shown in FIG. 9, a first plate 51 is mounted on a second plate 52. The first plate 51 is made of polypropylene resin, and the second plate 52 is made of polyethylene resin. The first plate 51 has a first hole 511, and the second plate 52 has a second hole 521 which is congruent with the first hole 511 of the first plate 51. A washer 54 is mounted on the first plate 51, and a screw 55 is inserted into a hole of the washer 54, the first hole 511 and the second hole 521. As a result, the first plate 51 is joined mechanically to the second plate 52.

However, in the third conventional process, the first hole 511 must be opened in the first plate 51, and the second hole 521 must be opened in the second plate 52. Then, the screw 55 must be inserted. Each of these steps is undesirably labor intensive. Further, the screw 55 projects from both of the first plate 51 and the second plate 52, marring the appearance of the final product. In addition, when tension is applied to the first plate 51 and the second plate 52 in the horizontal direction in FIG. 9, the first plate 51 or the second plate 52 may be torn at the first hole 511 or the second hole 521, respectively.

- 3 -

0158528

The present invention has been developed in view of the facts as described in the above, and its object is to provide a process which enables secure joining of different kinds of synthetic resins.

To accomplish the above-described object, a process for joining different kinds of synthetic resins includes several steps.

A first step includes providing a first kind of synthetic resin, which can store up the heat from a laser beam. A second step includes setting a mesh on a portion of the first kind of synthetic resin. The mesh has a higher melting point than the melting point of the first kind of synthetic resin. A third step includes setting a second kind of synthetic resin on the mesh, with a portion thereof in contact with the mesh. The second kind of synthetic resin can transmit the laser beam and has a lower melting point than the melting point of the mesh. A fourth step includes exposing an outer surface of the second kind of synthetic resin to the laser beam. The second kind of synthetic resin transmits the laser beam, and the first kind of synthetic resin stores up the heat of the laser beam. As a result, the portion of the first kind of synthetic resin, the portion of the second kind of synthetic resin and the mesh are heated by the heat of the laser beam. Accordingly, the portion of the first kind of synthetic resin and the portion of the second kind of synthetic resin are melted by the heat which is stored up in the first kind of synthetic resin. A fifth step includes applying a compressive force to the second kind of synthetic resin and the first kind of synthetic resin, so that the melted first kind of synthetic resin and the melted second kind synthetic resin will stick securely to the mesh. Upon cooling, the first kind of synthetic resin is joined securely to the second kind of synthetic resin.

Further, the outer surface of the second kind of synthetic resin does not have any scars, because the second kind of synthetic resin simply transmits the laser beam and the heat of the laser beam is stored up in the first kind of synthetic resin.

Furthermore, neither the first kind of synthetic resin nor the second kind of synthetic resin can easily torn, because neither has any holes therein.

Other objects and novel features of this invention will become more apparent from the description which follows, taken in conjunction with the accompanying drawings, and in which:

FIG. 1 is a cross-sectional view showing a third step of a first embodiment of a process according to the present invention;

FIG. 2 is a cross-sectional view showing a fourth step of the process;

FIG. 3 is a cross-sectional view showing a fifth step of the process;

FIG. 4 is a cross-sectional view showing a sixth step of the process;

FIG. 5 is an enlarged top view of a mesh;

FIG. 6 is an enlarged cross-sectional view showing a third step of a second embodiment of a process according to the invention, in which a spiny plate is sandwiched between two synthetic resins;

FIG. 7 is a diagram showing the transmittance of 20 wt% glass filler reinforced styrene acrylonitrile copolymer with 0.1 wt% carbon black;

FIG. 8 is a diagram showing the transmittance of polypropylene without any absorptive additives; and

FIG. 9 is a cross-sectional view showing a third conventional process.

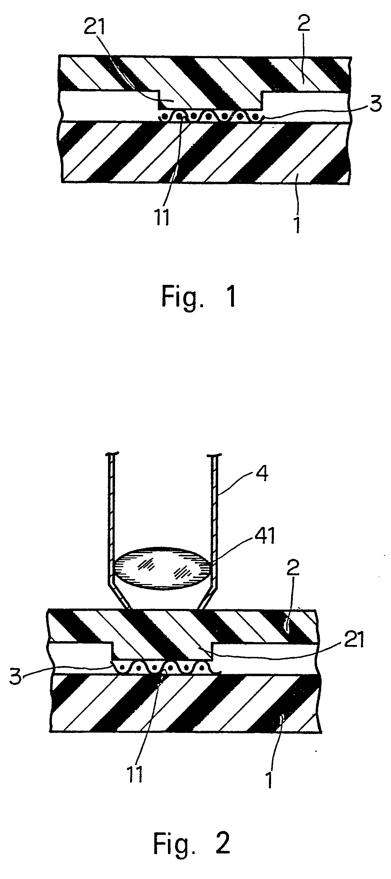

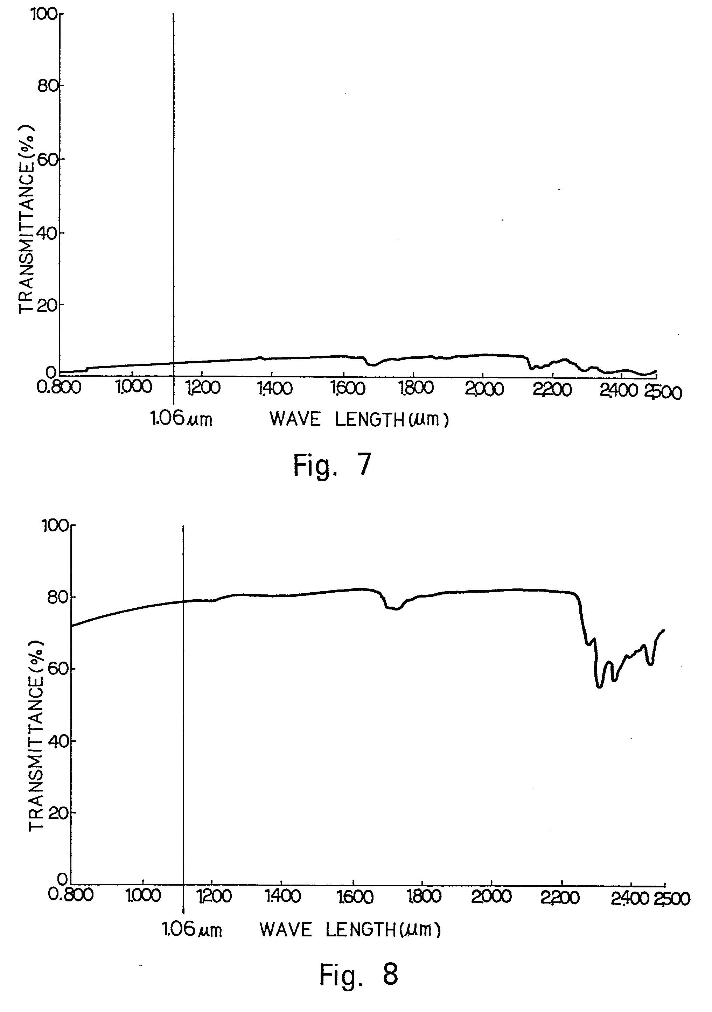

Referring to FIG. 1, a first step of a process for joining different kinds of synthetic resins includes providing a first plate 1 made of a first kind of synthetic resin which can store up the heat of a laser beam. For example, the first kind of synthetic resin can be styrene acrylonitrile copolymer reinforced with 20 wt% glass filler, and including 0.1 wt% carbon black as an additive. The first plate 1 of this composition is black. As shown in FIG. 7, the reinforced styrene acrylonitrile copolymer transmits only a little of a $Nd:YAG(Nd^{+3}:Y_3Al_5O_{12})$ laser beam. When the wavelength of the laser beam is 1.06 μm, the reinforced styrene acrylonitrile copolymer can transmit about 4% of a total amount of the Nd:YAG laser beam. Therefore, the reinforced styrene acrylonitrile copolymer can store up (absorb) most of the heat of the total amount of the laser beam.

Alternatively, the first kind of synthetic resin may be polypropylene resin which includes carbon black as an additive.

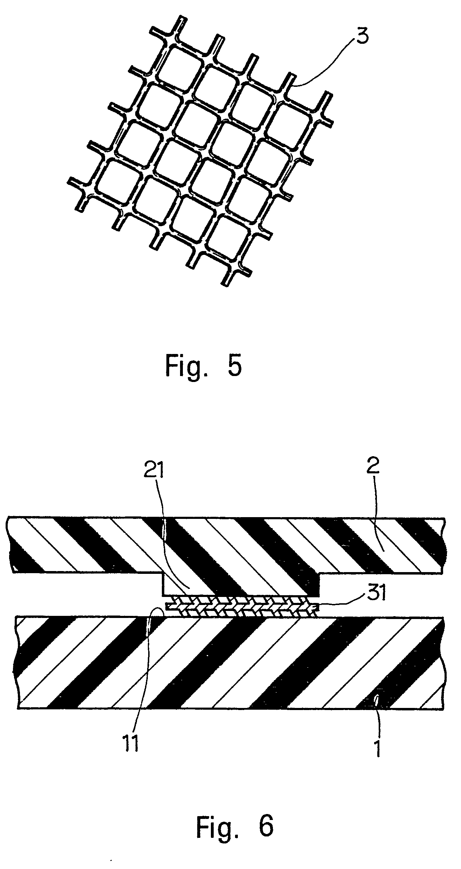

Returning to FIG. 1, a second step of the process includes setting a mesh 3 (shown in FIG. 5) on a contact portion 11 of an inner surface of the first plate 1. The mesh 3 is made of metal having a higher melting point than the melting point of the first kind of synthetic resin. Preferably, the mesh 3 is stainless steel. Alternatively, the mesh 3 may be copper, steel or brass.

A third step of the process includes setting a second plate 2 on the mesh 3. The second plate 2 is made of a second kind of synthetic resin which can transmit most of the laser beam and which has a lower melting point than the melting point of the metal of the mesh 3. The second plate 2 has a projection 21 on an inner surface thereof, and the projection 21 of the second plate is in contact with the mesh 3. A suitable portion of the outer surface of the second plate 2 for being radiated by the laser beam is opposite the projection 21 of the second plate 2.

The second kind of synthetic resin may be a polypropylene resin without any absorptive additives. As shown in FIG. 8, when the wavelength of the Nd:YAG laser beam is 1.06 $\mu$m, the polypropylene resin without any absorptive additives can transmit about 75% of the total amount of the Nd:YAG laser beam. Alternatively, the second kind of synthetic resin may be styrene acrylonitrile copolymer, 6-nylon resin or 66-nylon resin, all without any absorptive additives. The color of the plate 2 is milky white.

As shown in FIG. 2, a fourth step of the process includes setting a nozzle 4 of the laser beam on an outer surface of the second plate 2, and exposing the outer surface of the second plate 2 to the laser beam. The laser beam radiates from the nozzle 4 through a convex lens 41, and an end of the nozzle 4 preferably is in contact with the outer surface of the second plate 2.

When the outer surface of the second plate 2 is exposed to the laser beam, the second plate 2 transmits the laser beam, and the first plate 1 stores up the heat of the laser beam.

As a result, the first contact portion 11 of the first plate 1 and the projection 21 of the second plate 2 are melted by the heat which is stored up in the first plate 1.

With the preferred resins, the most suitable laser beam is a Nd:YAG laser beam, however, other laser beams may be used, including: Nd:glass laser beam; ruby laser beam; helium:neon (He:Ne) gas laser beam; krypton (Kr) gas laser beam; argon (Ar) gas laser beam; hydrogen ($H_2$) gas laser beam and nitrogen ($N_2$) gas laser beam.

With the preferred resins, a suitable wavelength of the laser beam for joining different kinds of synthetic resins is about 1.06 μm and less. When the wavelength of the laser beam is more than 1.06 μm, the first kind of synthetic resin cannot be joined to the second kind of synthetic resin, because the first kind of synthetic resin cannot transmit the laser beam.

With the preferred resins, the laser beam should be from 5W through 100W in power, in order to melt the contact portion 11 of the first plate 1 and the projection 21 of the second plate 2. When the generating power of the laser beam is less than 5W, the contact portion 11 of the first plate 1 and the projection 21 of the second plate 2 cannot be melted by the heat of the laser beam which is stored up in the first plate 1. When the generating power of the laser beam is more than 100W, the contact portion 11 of the first plate 1 and the projection 21 of the second plate 2 may vaporize or may be transmuted, so that the first plate 1 of the first kind of synthetic resin cannot be joined to the second plate 2 of the second kind of synthetic resin.

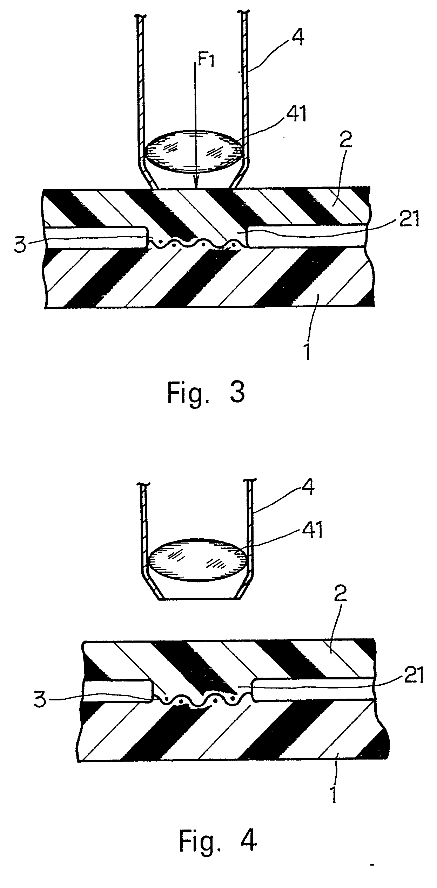

As shown in FIG. 3, a fifth step of the process includes applying a downward compressive force "$F_1$" to the outer surface of the second plate 2, the mesh 3 and the first plate 1 during exposure of the second plate 2 to the laser beam. The first kind of synthetic resin melted from the first plate 1 and the second kind of synthetic resin melted from the second plate 2 stick to the mesh 3, so that the first plate 1 and the second plate 2 are securely joined to the mesh 3. Preferably, the force "$F_1$" is applied to the second plate 2 through the nozzle 4 of the laser beam. Alternatively, downward compressive force "$F_1$" may

be applied to the second plate 2 through a different device and/or after the second plate 2 is exposed to the laser beam.

As shown in FIG. 4, a sixth step of the process includes stopping irradiation by the laser beam, and removing the nozzle 4 of the laser beam from the outer surface of the second plate 2. Concurrently, in the sixth step of the process, the downward compressive force $"F_1"$ force is removed from the second plate 2. Alternatively, the downward compressive force $"F_1"$ may be removed from the second plate 2 after the nozzle 4 of the laser beam is removed from the outer surface of the second plate 2.

A seventh step of the process includes cooling the first plate 1 and the second plate 2, which are joined to the mesh 3.

Therefore, by this process, the first kind of synthetic resin can be joined securely to the second kind of synthetic resin through the mesh 3.

FIG. 6 shows a third step of a second embodiment of the process according to the present invention for joining different kinds of synthetic resins. Most of the steps in the second embodiment are the same as steps of the process in the first embodiment which is described in the above. However, the second embodiment has a difference.

The difference of the second embodiment is use of a spiny plate 31 which is sandwiched between a first plate 1 and a second plate 2, instead of the mesh 3 of the first embodiment. The spiny plate 31 preferably is made of stainless steel and has a plurality of holes thereon through which the laser beam passes. When an outer surface of the second plate 2 is exposed to a laser beam, a projection 21 of the second plate 2 and a portion 11 of the first plate 1 are melted by the heat of the laser beam. The second kind of synthetic resin melted from the second plate 2 sticks to upper spines of the spiny plate 31, and the first kind of synthetic resin melted from the first plate 1 sticks to lower spines of the spiny plate 31.

Therefore, by the process of the second embodiment, the first kind of synthetic resin can be securely joined to the second kind of synthetic resin through the spiny plate 31.

As has been described above, according to the process for joining different kinds of synthetic resins of the present invention, one kind of synthetic resin can be joined securely to a different kind of synthetic resin without any mechanical devices. Further techniques for joining different kinds of synthetic resins may be found in the applications owned by applicant's assignee, filed in the European Patent Office concurrently with the present application, and all entitled "A Process for Joining Different Kinds of Synthetic Resins".

It should be apparent to one skilled in the art that the above-described embodiments are merely illustrations of a few of the many possible specific embodiments of the present invention. Numerous and varied other arrangements can readily be devised by those skilled in the art without departing from the spirit and scope of the invention, which is defined by the following claims.

- 9 -                    0158528

CLAIMS:

1. A process for joining an article (1) of a first kind of synthetic resin to an article (2) of a second kind of synthetic resin by forming a bond between a first portion (11) of the first article (1) and a second portion (21) of the second article, characterized in that a mesh (3) or spring plate (31) having a higher meeting point than the first and second kinds of resins is placed between the first and second portions (11,21), and an outer surface of the second article (2) is exposed to a laser beam, the second article (2) being adapted to transmit the laser beam to the first article (1) and the first article (1) being adapted to store up the heat of the laser beam so that the first and second portions (11,21) are melted thereby, and adhere to the mesh (3) or spring plate (31).

2. A process according to Claim 1, characterized in that the first kind of synthetic resin is styrene/ acrylonitrile copolymer or polypropylene resin, both having carbon black as an additive.

3. A process according to Claim 2, characterized in that the first kind of synthetic resin is reinforced with glass filler.

4. A process according to any preceding Claim, characterized in that the mesh (3) or spring plate (31) comprises stainless steel, copper, steel or brass.

5. A process according to any preceding Claim characterized in that the second kind of synthetic resin is 6-nylon resin, 66-nylon resin, polypropylene resin or styrene/acrylonitrile copolymer, all without any absorptive additives.

6. A process according to any preceding Claim, characterized in that the laser beam is generated by a Nd:YAG laser Nd:glass laser, ruby laser, helium: neon (He:Ne) gas laser, krypton (Kr) gas laser, argon (Ar) gas laser, hydrogen ($H_2$) gas laser or nitrogen ($N_2$) gas laser.

7. A process according to any preceding Claim, characterized in that the second article (2) comprises styrene/acrylonitrile copolymer without any absorptive additives and the first article (1) comprises of styrene/acrylonitrile copolymer reinforced with 20 wt % glass filler, with 0.1 wt % carbon black as an absorptive additive.

Fig. 1

Fig. 2

Fig. 3

Fig. 4

Fig. 5

Fig. 6

0158528

Fig. 7

Fig. 8

PRIOR ART

55 54 51

511

521 52

Fig. 9